# EUROPEAN PATENT APPLICATION

(11) **EP 4 815 533 A1**
(43) Date of publication of application: **30.09.2026**
(21) Application number: 24921077.4
(22) Date of filing: 04.02.2024
(51) Int. Cl.: H04W 12/03

(54) **WIRELESS COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN)
(74) Representative: RGTH
(86) International application number: PCT/CN2024/075830
(87) International publication number: WO 2025/161024

(57) **Abstract**

Wireless communication methods and communication devices are provided. A method includes: receiving, by a first device, first information, wherein the first information is used for indicating whether a first terminal device supports a first-type algorithm, and the first-type algorithm is a 256-bit ciphering algorithm; and determining, by the first device, a first algorithm based on the first information, wherein the first algorithm is an ciphering algorithm used between the first device and the first terminal device. In the present disclosure, the first device can determine, based on the first information, whether the first terminal device supports the 256-bit ciphering algorithm. On this basis, the first device can perform ciphering algorithm negotiation with the first terminal device, thereby facilitating concurrent support for different ciphering algorithm strengths in the communication system.

## Description

### TECHNICAL FIELD

The present disclosure relates to the field of communication technologies, and in particular, to wireless communication methods and communication devices.

### BACKGROUND

In a wireless communication system, to counteract quantum attacks, a 256-bit ciphering algorithm may be introduced for symmetric encryption between communication devices. Consequently, different communication devices may support ciphering algorithms of varying strengths. In this case, how these communication devices negotiate algorithms is an issue that remains to be addressed.

### SUMMARY

The present disclosure provides wireless communication methods and communication devices. The various aspects of the present disclosure are described below.

In a first aspect, a wireless communication method is provided, including: receiving, by a first device, first information, where the first information is used for indicating whether a first terminal device supports a first-type algorithm, and the first-type algorithm is a 256-bit ciphering algorithm; and determining, by the first device, a first algorithm based on the first information, where the first algorithm is a ciphering algorithm used between the first device and the first terminal device.

In a second aspect, a wireless communication method is provided, including: receiving, by a first terminal device, a first message sent by a first device, where the first message includes indication information of a first algorithm, and the first algorithm is a ciphering algorithm used between the first device and the first terminal device; the first algorithm is determined based on first information, the first information is used for indicating whether the first terminal device supports a first-type algorithm, and the first-type algorithm is a 256-bit ciphering algorithm.

In a third aspect, a communication device is provided. The communication device is a first device. The communication device includes: a receiving module configured to receive first information, where the first information is used for indicating whether a first terminal device supports a first-type algorithm, and the first-type algorithm is a 256-bit ciphering algorithm; and a determining module configured to determine a first algorithm based on the first information, where the first algorithm is a ciphering algorithm used between the first device and the first terminal device.

In a fourth aspect, a communication device is provided. The communication device is a first terminal device. The communication device includes: a receiving module configured to receive a first message sent by a first device, where the first message includes indication information of a first algorithm, and the first algorithm is a ciphering algorithm used between the first device and the first terminal device; the first algorithm is determined based on first information, the first information is used for indicating whether the first terminal device supports a first-type algorithm, and the first-type algorithm is a 256-bit ciphering algorithm.

In a fifth aspect, a communication device is provided, including a memory and a processor. The memory is configured to store a program, and the processor is configured to call the program in the memory to cause a terminal device to perform the method as described in the first aspect.

In a sixth aspect, a communication device is provided, including a memory and a processor. The memory is configured to store a program, and the processor is configured to call the program in the memory to cause a network device to perform the method as described in the second aspect.

In a seventh aspect, an apparatus is provided, including a processor configured to call a program from a memory to cause the apparatus to perform the method as described in the first aspect or the second aspect.

In an eighth aspect, a chip is provided, including a processor configured to call a program from a memory to cause a device equipped with the chip to perform the method as described in the first aspect or the second aspect.

In a ninth aspect, a computer-readable storage medium is provided, which has stored thereon a program, and the program causes a computer to perform the method as described in the first aspect or the second aspect.

In a tenth aspect, a computer program product is provided, including a program that causes a computer to perform the method as described in the first aspect or the second aspect.

In an eleventh aspect, a computer program is provided. The computer program causes a computer to perform the method as described in the first aspect or the second aspect.

In the present disclosure, the first device can determine, based on the first information, whether the first terminal device supports the 256-bit ciphering algorithm. On this basis, the first device can perform ciphering algorithm negotiation with the first terminal device, thereby facilitating concurrent support for different ciphering algorithm strengths in the communication system.

### BRIEF DESCRIPTION OF DRAWINGS

FIG. 1 is a schematic structural diagram of a wireless communication system applicable to an embodiment of the present disclosure.
FIG. 2 is a schematic flowchart of a key generation process in a 5G security key architecture.
FIG. 3 is a schematic flowchart of a NAS security mode command procedure.
FIG. 4 is a schematic flowchart of an AS security mode command procedure.
FIG. 5 is a schematic flowchart of a wireless communication method provided in an embodiment of the present disclosure.
FIGS. 6A to 6B are each a schematic flowchart of a wireless communication method provided in another embodiment of the present disclosure.
FIG. 7 is a schematic flowchart of a wireless communication method provided in Embodiment One of the present disclosure.
FIG. 8 is a schematic flowchart of a wireless communication method provided in Embodiment Three of the present disclosure.
FIGS. 9A to 9B are schematic flowcharts of wireless communication methods provided in Embodiment Five of the present disclosure.
FIG. 10 is a schematic structural diagram of a communication device provided in an embodiment of the present disclosure.
FIG. 11 is a schematic structural diagram of a communication device provided in another embodiment of the present disclosure.
FIG. 12 is a schematic structural diagram of a communication apparatus provided in an embodiment of the present disclosure.

### DETAILED DESCRIPTION

The technical solutions in the present disclosure will be described below with reference to the accompanying drawings.

### Communication system architecture

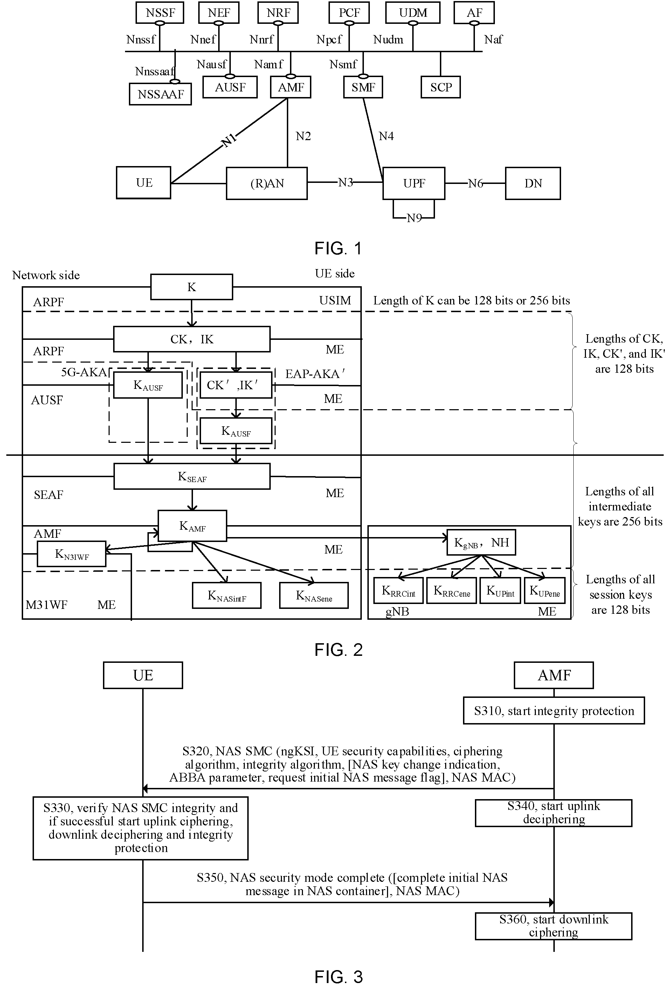

FIG. 1 is a schematic diagram of a communication system architecture applicable to embodiments of the present disclosure. The network architecture may include a terminal device, an access network (AN) element, and a core network element.

It should be understood that the technical solutions of the embodiments of the present disclosure can be applied to various communication systems, such as a 6th generation (6G) communication system, a 5th generation (5G) system or new radio (NR), a long term evolution (LTE) system, an LTE frequency division duplex (FDD) system, an LTE time division duplex (TDD) system, and the like. The technical solutions provided in the present disclosure may also be applied to future communication systems, such as a sixth generation mobile communication system or a satellite communication system.

The terminal device in the embodiments of the present disclosure may also be referred to as user equipment (UE), an access terminal, a user unit, a user station, a mobile site, a mobile station (MS), a mobile terminal (MT), a remote station, a remote terminal, a mobile device, a user terminal, a terminal, a wireless core network element, a user agent, or a user apparatus. The terminal device in the embodiments of the present disclosure may refer to a device that provides voice and/or data connectivity for a user, and may be used to connect people, things, and machines, such as a handheld device, an in-vehicle device, etc. with wireless connection capabilities. The terminal device in the embodiments of the present disclosure may be a mobile phone, a tablet computer (pad), a notebook computer, a personal digital assistant (PDA), a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. Optionally, the terminal device may be used to act as a base station. For example, the terminal device may act as a scheduling entity that provides sidelink signals between terminal devices in vehicle-to-everything (V2X) or device-to-device (D2D) communications. For instance, a cellular phone and a vehicle communicate with each other using sidelink signals. A cellular phone and a smart home device communicate without relaying communication signals through a base station.

The access network element may be an access network device. The access network device may be an access device through which a terminal accesses the network architecture in a wireless manner, and is mainly responsible for radio resource management, quality of service (QoS) management, data compression and encryption on an air interface side. The access network device may also be referred to as a radio access network (RAN) device, for example, the access network device may be a base station. The base station may broadly cover various names listed below or be substituted by any of the following names, such as NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transport node, transceiver node, baseband unit (BBU), remote radio unit (RRU), active antenna unit (AAU), remote radio head (RRH), central unit (CU), distributed unit (DU), positioning node, etc. The base station may be a macro base station, a micro base station, a relay node, a donor node or the like, or a combination thereof. The base station may also refer to a communication module, a modem, or a chip installed in the aforementioned devices or apparatuses. The base station may also be a mobile switching center and a device that functions as a base station in D2D, V2X, machine-to-machine (M2M) communication, a network-side device in a 6G network, a device that functions as a base station in a future communication system, etc. The base station may support networks of the same or different access technologies. The embodiments of the present disclosure do not limit the specific technology and specific device form adopted by the access network device.

The base station may be fixed or mobile. For example, a helicopter or a drone may be configured to act as a mobile base station, and one or more cells may move according to the location of the mobile base station. In other examples, a helicopter or a drone may be configured to act as a device that communicates with another base station.

In some deployments, the access network device in the embodiments of the present disclosure may refer to a CU or a DU; alternatively, the access network device includes a CU and a DU. The gNB may also include an AAU.

The types of core network elements may include a user plane function (UPF) element, an access and mobility management function (AMF) element, a session management function (SMF) element, a policy control function (PCF) element, an application function (AF), a data network (DN), a network slice selection function (NSSF), an authentication server function (AUSF), a unified data management (UDM) function, a network exposure function (NEF), a network repository function (NRF), and a network slice-specific authentication and authorization function (NSSAAF). In addition, some networks (e.g., 5G networks) also add a network data analytics function (NWDAF) to the core network. The NWDAF may be further divided into an analytics logical function (AnLF) and a model training logical function (MTLF). In some communication systems (e.g., 5G systems), the core network element may also be referred to as a network function (NF).

Each network element in FIG. 1 may be a network component in a hardware device, or a software function running on dedicated hardware, or a virtualized function instantiated on a platform (e.g., a cloud platform). It should be noted that the network architecture shown in the figure above is merely an exemplary illustration of the network elements included in the entire network architecture. The embodiments of the present disclosure do not limit the network elements included in the entire network architecture.

A person skilled in the art can understand that the network architecture shown in FIG. 1 does not constitute a limitation on the network architecture. In a specific implementation, the network architecture may include more or fewer network elements than shown, or combine some network elements. It should be understood that AN or RAN is represented as (R)AN in FIG. 1.

In some scenarios, network devices and terminal devices may be deployed on land, including indoors or outdoors, handheld or vehicle-mounted; or they may also be deployed on the water surface; or they may also be deployed on airplanes, balloons, and satellites in the air. The embodiments of the present disclosure do not limit the scenarios in which the network devices and terminal devices are located.

### Symmetric encryption algorithm (ciphering algorithm) and key architecture

The symmetric encryption algorithms used in 5G security may include 128-NEA1, 128-NEA2, and 128-NEA3. The three symmetric encryption algorithms correspond to SNOW 3G, the advanced encryption standard (AES) algorithm, and the Zuchongzhi (ZUC) algorithm, respectively. The details of the three symmetric encryption algorithms are shown in Table 1. The three symmetric encryption algorithms may also be used in 4th generation (4G), which are named 128-EEA1, 128-EEA2, and 128-EEA3, respectively.

**Table 1 Symmetric encryption algorithms**

| Algorithm | Type | Description | Comment | Recommendation |
|---|---|---|---|---|
| NEA0/NIA0 | - | No encryption designation for 5G | - | It is recommended to prohibit NEA0/NIA0 (no encryption/integrity) algorithms in networks. This recommendation will impact any customers that use non-compliant devices that do not support any LTE encryption/integrity. An exception may be made for subscriber identity module (SIM)-less emergency calls if these need to be supported, or for networks in any country where encryption is prohibited by local regulation |
| 128-NEA1/128-NIA1 (SNOW 3G) | Privacy (NEA1) and integrity (NIA1) | Identical to the corresponding LTE algorithms | Algorithm robustness exists | Mandatory to support in devices, gNBs, and AMFs. It is recommended to activate NEA1/NIA1 in networks to ensure the security of the application server layer and the NAS. The order of preference between NEA1/NIA1 and NEA2/NIA2 is not important. It is recommended to activate NEA1/NIA1 in networks to ensure the security of the access stratum (AS) and the non-access stratum (NAS). The order of preference between NEA1/NIA1 and NEA2/NIA2 is not important |
| 128-NEA2/128-NIA2 (AES) | Privacy (NEA2) and integrity (NIA2) | Identical to the corresponding LTE algorithms | Algorithm robustness exists | Mandatory to support in devices, gNBs, and AMFs. It is recommended to activate NEA2/NIA2 in networks to ensure the security of the AS and the NAS. The order of preference between NEA1/NIA1 and NEA2/NIA2 is not important |
| 128-NEA3/128-NIA3 (ZUC) | Privacy (NEA3) and integrity (NIA3) | Identical to the corresponding LTE algorithms | Algorithm robustness exists | Optional to support in devices, gNBs, and AMFs, and optional to activate in networks |

In the 5G security key architecture, lengths of the generated keys may be as shown in FIG. 2. As can be seen from FIG. 2, the lengths of the keys used to protect the session (i.e., to protect NAS and AS security) are each 128 bits.

### NAS algorithm negotiation

Each AMF may be configured with lists of allowed algorithms (i.e., a list of NAS integrity algorithms and a list of NAS ciphering algorithms) through network management. These lists should be ordered according to operator-determined priorities. To establish a NAS security context, the AMF may select one NAS ciphering algorithm and one NAS integrity protection algorithm. Then, the AMF may initiate a NAS security mode command procedure, and include the selected algorithms and UE security capabilities in a message sent to the UE (to detect modifications by attackers to the UE security capabilities). The AMF may select a NAS algorithm with the highest priority based on the list order.

The NAS security mode command procedure may be shown in FIG. 3, including steps S310 to S360. In step S310, the AMF starts integrity protection. The AMF may select corresponding security algorithms (ciphering algorithm and integrity algorithm) based on the UE security capabilities and locally configured lists of algorithms to start integrity protection. In step S320, the AMF sends a NAS security mode command (SMC) message to the UE. The NAS SMC may include: the algorithms selected by the AMF and the UE security capabilities, as well as a NAS key change indication (e.g., K_AMF_change_flag), a NAS key set identifier (ngKSI), an anti-bidding down between architectures (ABBA) parameter, a request initial NAS message flag, a message authentication code (MAC), etc.

In step S330, the UE may verify the integrity of the NAS SMC message. If it is successful, uplink ciphering, downlink deciphering, and integrity protection may be started. The UE may verify the integrity of the NAS SMC message to confirm that the message has not been tampered with, and then check the UE security capabilities returned by the AMF to confirm that no bidding down attack has occurred. Upon successful verification, the UE may start ciphering and integrity protection for the NAS using the algorithms selected by the AMF. In step S340, the AMF may start uplink deciphering. In step S350, the UE may send, to the AMF, a NAS security mode complete message which may include the complete initial NAS message in NAS container and the NAS MAC. In step S360, the AMF starts downlink ciphering.

In a case where an AMF change occurs, such as N2 handover or mobility registration update, a source AMF may send the UE security capabilities to a target AMF, and the target AMF may send the selected algorithms to the UE. In the case of N2 handover, the target AMF may send such information to the UE through the source AMF using a NAS container. In the case of mobility registration update, the target AMF and the UE may activate the selected algorithms using the NAS SMC procedure.

### AS algorithm negotiation

Each gNB/ng-eNB may be configured with lists of allowed algorithms (i.e., a list of integrity algorithms and a list of ciphering algorithms) through network management. These lists may be ordered according to operator-determined priorities. When an AS security context is established between the gNB/ng-eNB and the UE, the AMF may send 5G security capabilities of the UE to the gNB/ng-eNB. The gNB/ng-eNB may select an algorithm with the highest priority from its configured lists that is also present in the 5G security capabilities of the UE. The selected algorithm may be indicated to the UE during the AS SMC procedure. The selected ciphering algorithm may be used for ciphering of user plane data and radio resource control (RRC) signaling, and the selected integrity algorithm may be used for integrity protection of user plane data and RRC signaling.

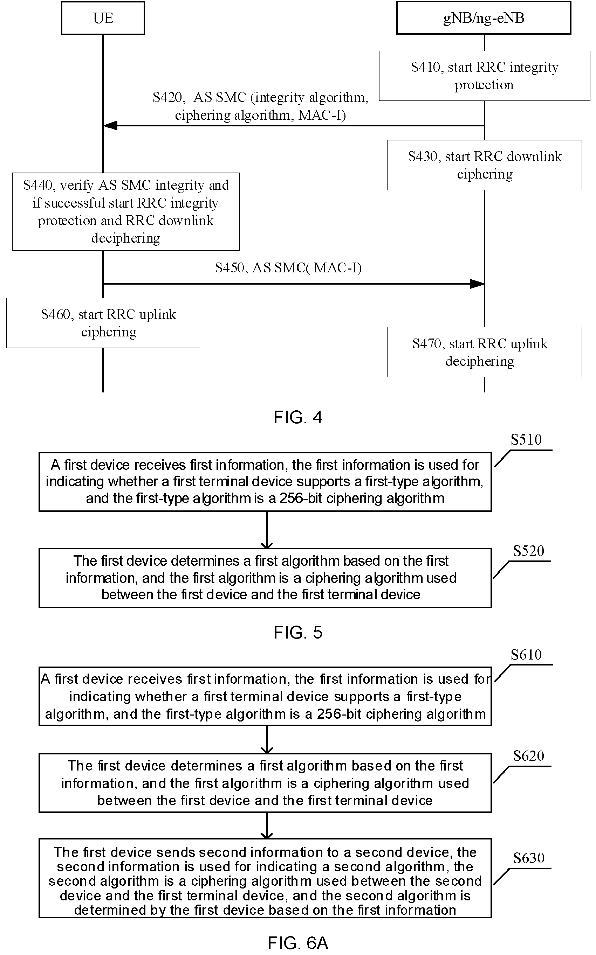

The AS security mode command procedure may be shown in FIG. 4, including steps S410 to S470. In step S410, the gNB or ng-eNB starts RRC integrity protection. The gNB or ng-eNB may select corresponding security algorithms for RRC and user plane (UP) protection based on the UE security capabilities and locally configured lists of algorithms to start RRC integrity protection. In step S420, the gNB or ng-eNB may send an AS SMC message to the UE. The AS SMC message may include the algorithms selected by the gNB or ng-eNB, the UE security capabilities, and message authentication code-integrity (MAC-I) information. In step S430, the gNB or ng-eNB may start RRC downlink ciphering. In step S440, the UE verifies the integrity of the AS SMC message. If it is successful, RRC integrity protection and RRC downlink deciphering may be started. The UE may verify the integrity of the message via the MAC-I to confirm that the message has not been tampered with, and check the UE security capabilities returned by the gNB or ng-eNB to confirm that no bidding down attack has occurred. Upon successful verification, the UE may start ciphering and integrity protection as well as downlink deciphering for the RRC layer using the algorithms selected by the gNB or ng-eNB. In step S450, the UE may send, to the gNB or ng-eNB, an AS SMC message which may include the MAC-I. In step S460, the UE may start RRC uplink ciphering. In step S470, the gNB or ng-eNB may start RRC uplink deciphering.

For an Xn handover procedure, the UE hands over from a source base station to a target base station, the source base station may send, to the target base station, the UE security capabilities and security algorithms used by the source cell. The target base station may select algorithms based on the UE security capabilities and locally configured lists of algorithms. In a case where different algorithms are selected, the target base station may carry the selected algorithms in a handover command message sent to the UE through the source base station. When handing over between a 4G base station and a 5G base station, the algorithms selected by the target base station need to be carried. The target base station needs to send the UE security capabilities to the AMF for AMF verification. In a case where the UE security capabilities are inconsistent with locally stored UE security capabilities, the AMF carries the UE security capabilities in a path switch acknowledge message sent to the target base station. After re-selecting the algorithms, the target base station updates the algorithms with the UE through an intra-cell handover.

For an N2 handover, the source AMF may send the UE security capabilities to the target AMF. The target AMF may send, to the target base station, an NGAP handover request message which includes the UE security capabilities. The source base station may send, to the target base station, a source to target transparent container which includes the algorithms used by the source cell. The target base station may select algorithms based on the UE security capabilities and locally configured lists of algorithms. In a case where different algorithms are selected, the target base station carries the selected algorithms in a handover command message sent to the UE.

### Quantum-safe algorithm

A quantum computer is a device that utilizes quantum-mechanical phenomena (such as superposition and entanglement) to perform computations and data manipulation. The security of currently prevalent cryptographic algorithms is predicated on certain hard mathematical problems. Due to the inherent parallel properties of quantum computers, some quantum algorithms may solve these hard mathematical problems more efficiently than classical algorithms, posing a severe and practical security threat to contemporary cryptography. The attacker may use Grover algorithm on a quantum computer to halve the effective key size, thereby reducing the security strength of a symmetric key algorithm by half. Consequently, to achieve resistance against quantum attacks, the key size of symmetric key algorithms needs to be doubled. The 128-bit symmetric key algorithms, such as AES-128, SNOW 3G, and ZUC-128, form the basis for the security of NAS signaling, RRC signaling, and UP data. To counteract quantum attacks, the introduction of 256-bit symmetric key algorithms into the system may be considered. Whether longer MACs also need to be introduced requires further investigation.

As mentioned above, the ciphering algorithms used for NAS signaling, RRC signaling, and user data in 4G and 5G systems are all 128-bit symmetric encryption algorithms. With the upgrade of algorithm capabilities supported by terminals, radio access network devices (such as gNB and ng-eNB), and core network devices (such as AMF), these communication entities may gradually enhance their algorithm capabilities to support 256-bit algorithms to defend against quantum attacks. For instance, communication entities supporting high-strength algorithms are deployed in 6G communication systems. Consequently, entities supporting different ciphering algorithm strengths inevitably coexist within communication systems. Therefore, there is a need to design an algorithm negotiation method among such entities, enabling the phased introduction and concurrent support of 128-bit and 256-bit ciphering algorithms.

In view of this, the method in the embodiments of the present disclosure will be described in detail below. In the present disclosure, a first device can determine whether a first terminal device supports a 256-bit ciphering algorithm based on first information. On this basis, the first device can perform ciphering algorithm negotiation with the first terminal device, thereby facilitating concurrent support for different ciphering algorithm strengths in the communication system.

As shown in FIG. 5, the embodiments of the present disclosure provide a wireless communication method, and the method can be executed by a first device and a first terminal device. The first device may be an access network device as described above, such as a gNB. Alternatively, the first device may also be a core network element (or referred to as "core network device") as described above, such as an AMF. The first terminal device may be any of the terminal devices described above, and the first terminal device may establish a connection with the first device.

The method shown in FIG. 5 may include steps S510 to S520. In step S510, the first device receives first information. The first information can be used for indicating whether the first terminal device supports a first-type algorithm, where the first-type algorithm is a 256-bit ciphering algorithm. That is, the first device can determine whether the first terminal device supports the 256-bit algorithm based on the first information. In step S520, the first device can determine a first algorithm based on the first information, where the first algorithm is a ciphering algorithm used between the first device and the first terminal device. That is, the first device can determine the ciphering algorithm used between the first device and the first terminal device based on whether the first terminal device supports the 256-bit algorithm, thereby achieving algorithm negotiation. It is noteworthy that the 256-bit algorithm in the embodiments of the present disclosure may refer to a Snow 3G 256-based algorithm, AES 256-based algorithm, or ZUC 256-based algorithm. The ciphering in the embodiments of the present disclosure may refer to authenticated encryption, and the 256-bit algorithm in the embodiments of the present disclosure may be used for authenticated encryption. The authenticated encryption is a combined algorithm that can perform ciphering and/or integrity protection in a single process. The authenticated encryption may correspondingly perform ciphering and/or integrity protection based on algorithm inputs.

The first information is described in detail below. The first information may include one or more of the following: one or more first identifiers; first indication information; or second indication information.

As an example, in a case where the first terminal device supports the first-type algorithm, the first information may include one or more first identifiers, and the one or more first identifiers may be used for indicating one or more first-type algorithms supported by the first terminal device. In a case where the first terminal device supports the 256-bit ciphering algorithm, the first information may include a first identifier for indicating the 256-bit algorithm supported by the first terminal device. In a case where the first terminal device does not support the 256-bit ciphering algorithm, the first information may not include the first identifier. That is, the one or more first identifiers may constitute a list of 256-bit algorithms supported by the first terminal device, and the first information may include this list of algorithms. The first identifier may be an algorithm identifier. For example, an identifier 256-NEA1 may be used for representing the Snow 5G 256-bit algorithm, an identifier 256-NEA2 may be used for representing the AES 256-bit algorithm, and the identifier 256-NEA3 may be used for representing the ZUC 256-bit algorithm. The first identifier helps the first device to clearly identify the 256-bit ciphering algorithm supported by the first terminal device.

As another example, the first information may include first indication information, and the first indication information may be used for indicating whether the first terminal device supports the first-type algorithm. The form of the first indication information is not limited in the present disclosure. For instance, the first indication information may occupy one bit. When a value of the first indication information is a first value, it may indicate that the first terminal device supports the 256-bit ciphering algorithm. When the value of the first indication information is a second value, it may indicate that the first terminal device does not support the 256-bit ciphering algorithm. Alternatively, the presence of this bit in the first information may indicate that the first terminal device supports the 256-bit ciphering algorithm, and the absence of this bit in the first information may indicate that the first terminal device does not support the 256-bit ciphering algorithm. The first indication information helps the first device to quickly determine whether the first terminal device supports the 256-bit ciphering algorithm.

As another example, in a case where the first terminal device supports the first-type algorithm, the first information may include second indication information, and the second indication information may be used for indicating that the first-type algorithm is used as the first algorithm. That is, when the first terminal device supports the 256-bit ciphering algorithm, the first information may include the second indication information to indicate that the first device uses the 256-bit ciphering algorithm as the ciphering algorithm between the first device and the first terminal device. The form of the second indication information is not limited in the present disclosure. For instance, the second indication information may occupy one bit. In a case where a value of the second indication information is a first value, it may indicate that the 256-bit ciphering algorithm is used as the ciphering algorithm between the first device and the first terminal device. In a case where the value of the second indication information is a second value, it may indicate that the 256-bit ciphering algorithm is not used as the ciphering algorithm between the first device and the first terminal device. Alternatively, the presence of this bit in the first information may indicate that the 256-bit ciphering algorithm is used as the ciphering algorithm between the first device and the first terminal device, and the absence of this bit in the first information may indicate that the 256-bit ciphering algorithm is not used as the ciphering algorithm between the first device and the first terminal device. The second indication information helps the first device to determine the first algorithm more efficiently.

It is noteworthy that the first information may also include multiple types of the aforementioned information, which will not be repeated here.

In some implementations, the first information may further include third indication information, and the third indication information can be used for indicating that the first-type algorithm is used for performing ciphering and/or integrity protection. In a case where the first-type algorithm is used for performing ciphering, it means that the first-type algorithm can be used for performing the ciphering operation in the authenticated encryption described above. In a case where the first-type algorithm is used for performing integrity protection, it means that the first-type algorithm can be used for performing the integrity protection operation in the authenticated encryption described above. Furthermore, the third indication information may be carried in the first indication information or the second indication information.

The first information may be carried in first capability information, and the first capability information can be used for indicating security capabilities of the first terminal device. That is, the first capability information may be security capability information of the first terminal device, and the first device can determine whether the first terminal device supports the 256-bit ciphering algorithm based on the security capability information of the first terminal device. The first capability information may be sent by the first terminal device to the first device, or the first capability information may be sent by the core network device (e.g., AMF) to the first device, or the first capability information may be sent by another first device to the first device. For example, in a case where the first terminal device initially accesses the first device, the first terminal device may report its own security capability information to the first device. As another example, in a case where the first terminal device initially accesses the first device, the core network device may send the security capability information of the first terminal device to the first device (in this case, the first device is an access network device). As another example, in a case where the first device changes due to handover or mobility registration update during the connection procedure between the first terminal device and the first device, the source first device may send the security capability information of the first terminal device to the target first device. The first capability information helps the first device determine the ciphering algorithm used between the first device and the first terminal device.

How the first device determines the first algorithm is described in detail below. For example, determining, by the first device, the first algorithm based on the first information may involve different scenarios. In one scenario, in a case where the first terminal device supports the first-type algorithm and the first device supports the first-type algorithm, the first device may preferentially select the first-type algorithm as the first algorithm. That is, in a case where both the first terminal device and the first device support the 256-bit ciphering algorithm, the first device preferentially selects the 256-bit ciphering algorithm as the ciphering algorithm used between the first terminal device and the first device. In another scenario, in a case where the first terminal device supports the first-type algorithm but the first device does not support the first-type algorithm, the first device may select a second-type algorithm as the first algorithm, where the second-type algorithm is a 128-bit ciphering algorithm. That is, in a case where the first terminal device supports the 256-bit ciphering algorithm but the first device does not support the 256-bit ciphering algorithm, the first device may select the 128-bit ciphering algorithm as the ciphering algorithm used between the first terminal device and the first device. In yet another scenario, in a case where the first terminal device does not support the first-type algorithm, the first device may select the second-type algorithm as the first algorithm. That is, in a case where the first terminal device does not support the 256-bit ciphering algorithm, the first device may select the 128-bit ciphering algorithm as the ciphering algorithm used between the first terminal device and the first device. Therefore, it is conducive to realizing the coordination of the ciphering algorithm used between the first terminal device and the first device.

Furthermore, examples of how the first device uses the first algorithm are introduced. As an example, the first device is a core network device. In a case where the core network device determines to use the first-type algorithm based on the first information, the core network device may directly use a 256-bit key for NAS ciphering (which may be authenticated encryption). In a case where the core network device determines to use the second-type algorithm based on the first information, the core network device may apply a truncation (Trunc) function (i.e., a truncation method) to the generated 256-bit key KNASenc to derive a 128-bit key for NAS ciphering (which may be authenticated encryption). As another example, the first device is an access network device. In a case where the access network device determines to use the first-type algorithm based on the first information, the access network device may directly use a 256-bit key for AS ciphering (which may be authenticated encryption). In a case where the access network device determines to use the second type of algorithm, the access network device may apply a Trunc function to the keys KRRCenc and KUPenc to derive 128-bit keys for protecting the RRC layer and the user plane (UP) respectively (which may be authenticated encryption).

In some implementations, after determining the first algorithm based on the first information, the first device may send a first message to the first terminal device. The first message may include indication information for the first algorithm. That is, after determining the first algorithm based on the first information, the first device may indicate the first algorithm to the first terminal device, thereby facilitating ciphering algorithm negotiation with the first terminal device. After the first terminal device determines the first algorithm based on the first message, the use of the first algorithm may be illustrated as follows. In a case where the first terminal device determines to use the first-type algorithm based on the first message, the first terminal device may directly use a 256-bit key for ciphering between the first terminal device and the first device (which may be authenticated encryption). In a case where the first terminal device determines to use the second-type algorithm based on the first message, the first terminal device may apply a Trunc function (i.e., a truncation method) to the generated 256-bit key KNASenc to derive a 128-bit key for ciphering between the first terminal device and the first device (which may be authenticated encryption).

In some implementations, referring to FIG. 6A, the wireless communication method in the embodiments of the present disclosure may further include step S630. In step S630, the first device sends second information to a second device, where the second information can be used for indicating a second algorithm, and the second algorithm can be a ciphering algorithm used between the second device and the first terminal device. The second algorithm may be determined by the first device based on the first information. That is, the first device may negotiate the ciphering algorithm used between the second device and the first terminal device based on the first information. For example, in a dual-connectivity scenario, the first device may be a master node (MN) (also known as a master base station), and the second device may be a secondary node (SN) (also known as a secondary base station). In a case where an SN handover occurs, the MN may negotiate the ciphering algorithm used between the SN and the terminal device for the SN based on the first information. Therefore, it is conducive to realizing the coordination of ciphering algorithm used between the first terminal device and the second device.

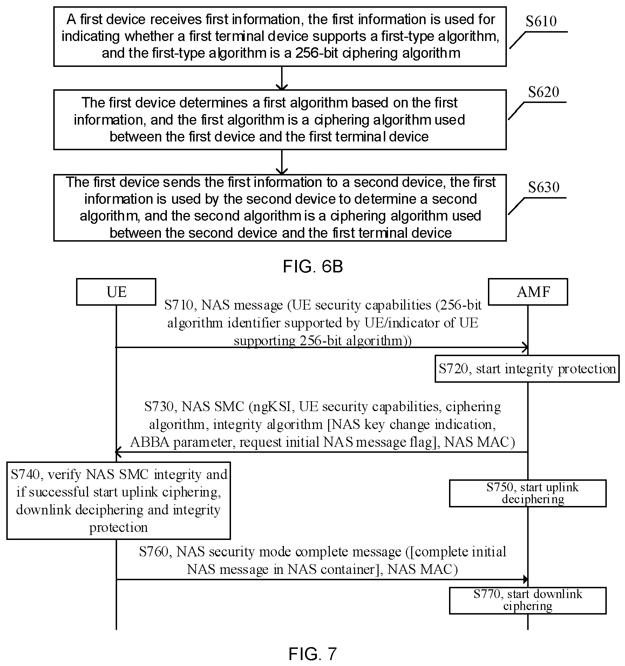

In some other implementations, referring to FIG. 6B, the wireless communication method in the embodiments of the present disclosure may further include step S630. In step S630, the first device sends the first information to a second device. The first information can be used by the second device to determine a second algorithm, and the second algorithm can be the ciphering algorithm used between the second device and the first terminal device. That is, the first device may send the first information to the second device to assist the second device in determining the ciphering algorithm used between the second device and the first terminal device. For example, in a dual-connectivity scenario, the first device may be an MN, and the second device may be an SN. When an SN handover occurs, the MN may send the first information to the SN so that the SN may negotiate the ciphering algorithm used between the SN and the terminal device. Therefore, it is conducive to realizing the coordination of ciphering algorithm used between the first terminal device and the second device.

The wireless communication method in the embodiments of the present disclosure is described in detail below with reference to Embodiment One to Embodiment Five. Embodiments One and Two are described by taking an example in which the first device is a core network device (i.e., the AMF). Embodiments Three to Five are described by taking an example in which the first device is an access network device (i.e., the gNB/ng-eNB). For example, in the following embodiments, the first information is carried in the UE security capabilities. The UE security capabilities may include 256-bit algorithm identifier(s) supported by the UE (i.e., the one or more first identifiers), or an indicator of UE supporting 256-bit algorithm(s) (i.e., the first indication information), or an indicator of using 256-bit algorithm(s) (i.e., the second indication information).

### Embodiment One

Referring to FIG. 7, in Embodiment One, the UE and the AMF perform algorithm negotiation during an initial access procedure. In step S710, the UE sends an NAS message to the AMF. The NAS message may include the UE security capabilities, which may include the 256-bit algorithm identifier(s) supported by the UE or the indicator of supporting 256-bit algorithm(s). In step S720, the AMF starts integrity protection. The AMF may select corresponding security algorithms (ciphering algorithm and integrity algorithm) based on the UE security capabilities and locally configured lists of algorithms to start integrity protection. It is noteworthy that in the locally configured lists of algorithms for the AMF that supports 256-bit algorithms, the supported 256-bit algorithms have higher priority than the supported 128-bit algorithms. In a case where the AMF supports 256-bit algorithm(s), the AMF may preferentially select a 256-bit algorithm. In a case where the AMF does not support 256-bit algorithm(s), the AMF may select a 128-bit algorithm. In step S730, the AMF sends a NAS SMC message to the UE. The NAS SMC may include the algorithm selected by the AMF, the UE security capabilities, etc. The remaining steps are the same as those in the NAS algorithm negotiation procedure shown in FIG. 3, and details will not be repeated here.

### Embodiment Two

In Embodiment Two, the UE and the AMF perform algorithm negotiation in a handover or mobility registration update scenario. In the handover or mobility registration update scenario, the AMF serving the UE changes. The UE hands over from a source AMF to a target AMF, the source AMF may send, to the target AMF, the UE security capabilities which may include the 256-bit algorithm identifier(s) supported by the UE or the indicator of UE supporting 256-bit algorithm(s). Alternatively, the UE may send, to the target AMF, a NAS message including the UE security capabilities which include the 256-bit algorithm identifier(s) supported by the UE, or the indicator of UE supporting 256-bit algorithm(s), or the indicator of using 256-bit algorithm(s) between the AMF and the UE. The AMF may select corresponding security algorithms (ciphering algorithm and integrity algorithm) based on the UE security capabilities and locally configured lists of algorithms to start integrity protection. The remaining steps will not be repeated here.

In a case where the communication system requires the use of 256-bit algorithms for NAS security protection and deploys core network devices with 256-bit capabilities, algorithm negotiation between the UE and the core network device may be realized based on Embodiments One and Two, thereby facilitating the phased introduction and concurrent support of 128-bit and 256-bit ciphering algorithms.

### Embodiment Three

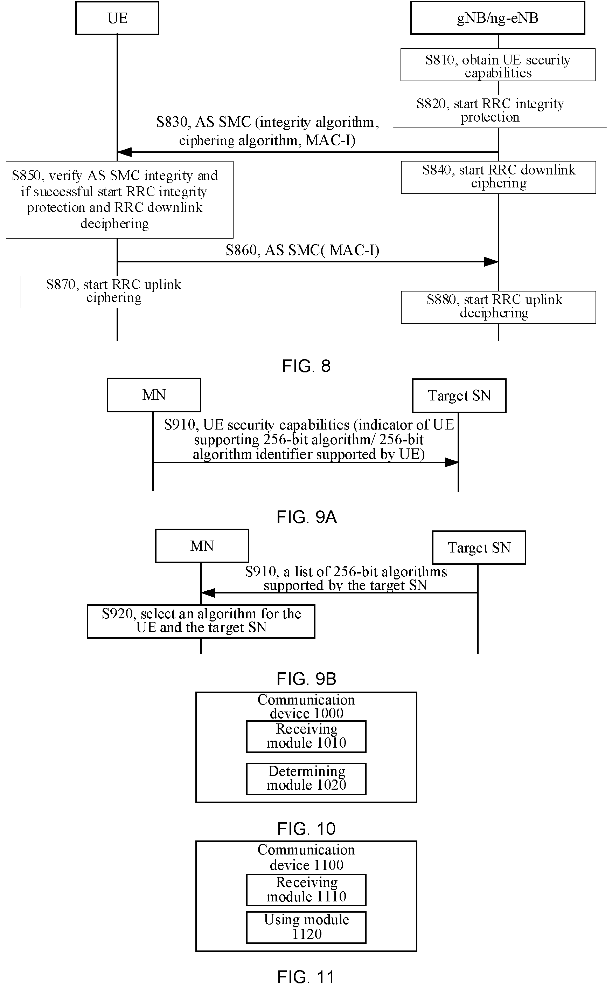

Referring to FIG. 8, in Embodiment Three, the UE and the gNB/ng-eNB perform algorithm negotiation during an initial access procedure. In step S810, the gNB/ng-eNB obtains the UE security capabilities which may include the 256-bit algorithm identifier(s) supported by the UE or the indicator of UE supporting 256-bit algorithm(s). The gNB may obtain the UE security capabilities through reporting from the UE or transmission from the AMF. In step S820, the gNB/ng-eNB starts integrity protection. The gNB/ng-eNB may select corresponding security algorithms for RRC and UP protection based on the UE security capabilities and locally configured lists of algorithms. It is noteworthy that in the locally configured lists of algorithms for the gNB/ng-eNB that supports 256-bit algorithms, the supported 256-bit algorithms have higher priority than the supported 128-bit algorithms. In a case where the gNB/ng-eNB supports 256-bit algorithm(s), the gNB/ng-eNB may preferentially select a 256-bit algorithm. In a case where the gNB/ng-eNB does not support 256-bit algorithm(s), the gNB/ng-eNB may select a 128-bit algorithm. In step S830, the gNB/ng-eNB sends an AS SMC message to the UE. The AS SMC may include the algorithm selected by the gNB/ng-eNB, the UE security capabilities, etc. The remaining steps are the same as those in the AS algorithm negotiation procedure shown in FIG. 4, and details will not be repeated here.

### Embodiment Four

In Embodiment Four, the UE and the gNB/ng-eNB perform algorithm negotiation in an Xn handover or N2 handover scenario. In the Xn handover or N2 handover scenario, the gNB/ng-eNB serving the UE changes. In a case where the UE hands over from a source base station to a target base station, the source base station may send, to the target base station, the UE security capabilities and a security algorithm used by a source cell. The UE security capabilities may include the 256-bit algorithm identifier(s) supported by the UE or the indicator of UE supporting 256-bit algorithm(s). The target base station may select an algorithm based on the UE security capabilities and locally configured lists of algorithms. It is noteworthy that in the locally configured lists of algorithms for the gNB/ng-eNB that supports 256-bit algorithms, the supported 256-bit algorithms have higher priority than the supported 128-bit algorithms. In a case where the gNB/ng-eNB supports 256-bit algorithm(s), the gNB/ng-eNB may preferentially select a 256-bit algorithm. In a case where the gNB/ng-eNB does not support 256-bit algorithm(s), the gNB/ng-eNB may select a 128-bit algorithm.

In a case where the target base station selects a different algorithm, for example, in a system interoperation scenario where the UE supporting 256-bit algorithm(s) hands over from a base station with low algorithm strength to a base station with high algorithm strength, the target base station may carry the selected 256-bit algorithm in a handover command message sent by the source base station to the UE.

The target base station needs to send the UE security capabilities to the AMF for AMF verification. In a case where the UE security capabilities are inconsistent with locally stored UE security capabilities, the AMF carries the UE security capabilities in a path switch acknowledge message sent to the target base station. After re-selecting the algorithms, the target base station updates the algorithms with the UE through an intra-cell handover.

### Embodiment Five

In Embodiment Five, the UE and the gNB/ng-eNB perform algorithm negotiation in a dual-connectivity handover scenario. In the dual-connectivity scenario, there are a master base station (MN) and a secondary base station (SN). Possible base station handover scenarios include: 1. MN handover and SN unchanged; 2. MN handover and SN handover; and 3. MN unchanged and SN handover. In a case where the MN handover occurs, the algorithm negotiation between the MN and the UE is the same as in Embodiment Three.

In a case where the MN is unchanged and the SN handover occurs, referring to FIG. 9A, the MN may send the UE security capabilities to a target SN for algorithm negotiation between the UE and the SN. Alternatively, referring to FIG. 9B, the MN may negotiate a security algorithm for the UE and the SN based on local lists of algorithms/a list of algorithms supported by the SN sent by the SN, as well as the UE security capabilities. The UE security capabilities may include the 256-bit algorithm identifier(s) supported by the UE or the indicator of UE supporting 256-bit algorithm(s).

In a case where the communication system requires the use of 256-bit algorithms for AS security protection and deploys access network devices with 256-bit capabilities, algorithm negotiation between the UE and the access network device may be realized based on Embodiments Three to Five, thereby facilitating the phased introduction and concurrent support of 128-bit and 256-bit ciphering algorithms.

The method embodiments of the present disclosure are described in detail above with reference to FIGS. 1 to 9. The apparatus embodiments of the present disclosure will be described in detail with reference to FIGS. 10 to 12. It should be understood that the descriptions of the method embodiments and the apparatus embodiments correspond to each other; therefore, as for parts not described in detail, reference can be made to the above method embodiments.

FIG. 10 is a schematic structural diagram of a communication device provided in an embodiment of the present disclosure. The communication device 1000 shown in FIG. 10 is a first device, and the communication device 1000 can include a receiving module 1010 and a determining module 1020. The receiving module 1010 can be configured to receive first information, the first information can be used for indicating whether the first terminal device supports a first-type algorithm, and the first-type algorithm may be a 256-bit ciphering algorithm. The determining module 1020 can be configured to determine a first algorithm based on the first information, and the first algorithm can be a ciphering algorithm used between the first device and the first terminal device.

In some implementations, in a case where the first terminal device supports the first-type algorithm, the first information may include one or more first identifiers, and the one or more first identifiers may be used for indicating one or more first-type algorithms supported by the first terminal device.

In some implementations, the first information may include first indication information, and the first indication information may be used for indicating whether the first terminal device supports the first-type algorithm.

In some implementations, in a case where the first terminal device supports the first-type algorithm, the first information may include second indication information, and the second indication information may be used for indicating that the first device uses the first-type algorithm as the first algorithm.

In some implementations, the first information may be carried in first capability information, and the first capability information may be used for indicating security capabilities of the first terminal device.

In some implementations, determining, by the first device, the first algorithm based on the first information may include that: in a case where the first terminal device supports the first-type algorithm and the first device supports the first-type algorithm, the first device may preferentially select the first-type algorithm as the first algorithm; in a case where the first terminal device supports the first-type algorithm and the first device does not support the first-type algorithm, the first device may select a second-type algorithm as the first algorithm, the second-type algorithm being a 128-bit ciphering algorithm; and in a case where the first terminal device does not support the first-type algorithm, the first device may select the second-type algorithm as the first algorithm.

In some implementations, the communication device 1000 may further include a first sending module 1030. The sending module 1030 may be configured to send second information to a second device, the second information may be used for indicating a second algorithm, the second algorithm may be a ciphering algorithm used between the second device and the first terminal device, and the second algorithm may be determined by the first device based on the first information.

In some implementations, the communication device 1000 may further include a second sending module 1040. The sending module 1040 may be configured to send the first information to a second device, the first information may be used by the second device to determine a second algorithm, and the second algorithm is a ciphering algorithm between the second device and the first terminal device.

In some implementations, the first device may be an access network device.

In some implementations, the first device may be a core network device.

FIG. 11 is a schematic structural diagram of a communication device provided in another embodiment of the present disclosure. The communication device 1100 shown in FIG. 11 is a first terminal device. The communication device 1100 may include a receiving module 1110 and a using module 1120. The receiving module 1110 may be configured to receive a first message sent by a first device, the first message may include indication information of a first algorithm, and the first algorithm may be a ciphering algorithm used between the first device and the first terminal device. The using module 1120 may be configured to use the first algorithm for ciphering with the first device, the first algorithm may be determined based on first information, the first information may be used for indicating whether the first terminal device supports a first-type algorithm, and the first-type algorithm is a 256-bit ciphering algorithm.

In some implementations, in a case where the first terminal device supports the first-type algorithm, the first information may include one or more first identifiers, and the one or more first identifiers may be used for indicating one or more first-type algorithms supported by the first terminal device.

In some implementations, the first information may include first indication information, and the first indication information may be used for indicating whether the first terminal device supports the first-type algorithm.

In some implementations, in a case where the first terminal device supports the first-type algorithm, the first information may include second indication information, and the second indication information may be used for indicating that the first device uses the first-type algorithm as the first algorithm.

In some implementations, in a case where the first terminal device supports the first-type algorithm and the first device supports the first-type algorithm, the first algorithm may be the first-type algorithm.

In some implementations, in a case where the first terminal device supports the first-type algorithm and the first device does not support the first-type algorithm, the first algorithm may be a second-type algorithm, and the second-type algorithm is a 128-bit ciphering algorithm.

In some implementations, in a case where the first terminal device does not support the first-type algorithm, the first algorithm may be a second-type algorithm.

In some implementations, the communication device may further include a sending module 1130. The sending module 1130 may be configured to send the first information to the first device before the first terminal device receives the first message sent by the first device.

In some implementations, the first information is carried in first capability information, and the first capability information may be used for indicating security capabilities of the first terminal device.

In some implementations, the first device may be an access network device or a core network device.

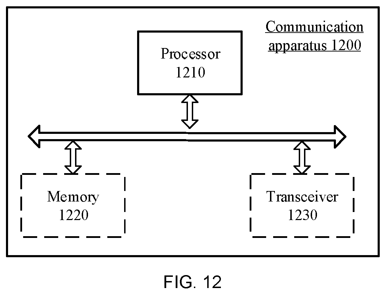

FIG. 12 is a schematic structural diagram of a communication apparatus in an embodiment of the present disclosure. The dashed lines in FIG. 12 indicate that the unit or module is optional. The apparatus 1200 may be configured to implement the method described in the above method embodiments. The apparatus 1200 may be a chip, a terminal device, or a network device.

The apparatus 1200 may include one or more processors 1210. The processor 1210 may support the apparatus 1200 in implementing the method described in the above method embodiments. The processor 1210 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic device, a discrete gate or transistor logic device, a discrete hardware component, or the like. A general-purpose processor may be a microprocessor, or the processor may be any conventional processor, etc. The apparatus 1200 may further include one or more memories 1220. The memory 1220 stores a program thereon, and the program is executable by the processor 1210, causing the processor 1210 to perform the method described in the above method embodiments. The memory 1220 may be independent of the processor 1210 or integrated into the processor 1210. The apparatus 1200 may further include a transceiver 1230. The processor 1210 may communicate with other devices or chips via the transceiver 1230. For example, the processor 1210 may send and receive data with other devices or chips via the transceiver 1230.

An embodiment of the present disclosure also provides a computer-readable storage medium for storing a program. The computer-readable storage medium can be applied to the communication device provided in the embodiments of the present disclosure, and the program causes a computer to perform the method in each of the embodiments of the present disclosure.

An embodiment of the present disclosure also provides a computer program product. The computer program product includes a program. The computer program product can be applied to the communication device provided in the embodiments of the present disclosure, and the program causes a computer to perform the method in each of the embodiments of the present disclosure.

An embodiment of the present disclosure also provides a computer program. The computer program can be applied to the communication device provided in the embodiments of the present disclosure, and the computer program causes a computer to perform the method in each of the embodiments of the present disclosure.

It should be understood that all or part of the functions of the communication device in the present disclosure may also be implemented by software functions running on hardware, or by virtualized functions instantiated on a platform (e.g., a cloud platform).

It should be understood that the terms "system" and "network" may be used interchangeably in the present disclosure. In addition, the terms used in the present disclosure are for the purpose of describing particular embodiments only and are not intended to limit the present disclosure. The terms "first," "second," "third," and "fourth," etc. in the specification, claims, and the accompanying drawings of the present disclosure are used to distinguish between different objects and not to describe a specific order. Furthermore, the terms "comprise/include" and "have" and any derivatives thereof, are intended to cover non-exclusive inclusion.

In the embodiments of the present disclosure, the term "indicate" mentioned may mean a direct indication or an indirect indication, or may represent that there is an association relationship. For example, A indicates B, which may mean that A directly indicates B (for example, B may be obtained by A); or it may mean that A indirectly indicates B (for example, A indicates C, and B may be obtained by C); or it may mean that there is an association relationship between A and B.

In the embodiments of the present disclosure, "B corresponding to A" means that B is associated with A, and B can be determined based on A. However, it should also be understood that determining B based on A does not mean that B is determined solely based on A, but can also be determined based on A and/or other information.

In the embodiments of the present disclosure, the term "correspond" may mean that there is a direct correspondence or indirect correspondence between two, or it may mean that there is an associated relationship between the two, or it may mean a relationship of indicating and being indicated or a relationship of configuring and being configured, or the like.

In the embodiments of the present disclosure, the "protocol" may refer to a standard protocol in the field of communications, for example, it may include an LTE protocol, an NR protocol, and related protocols applied in future communication systems, which will not be limited in the disclosure.

In the embodiments of the present disclosure, the term "and/or" is only an association relationship to describe associated objects, meaning that there may be three relationships between associated objects. For example, "A and/or B" may represent three cases: A exists alone, both A and B exist, and B exists alone. In addition, a character "/" herein generally means that related objects before and after this character are in an "or" relationship.

In the embodiments of the present disclosure, the term "comprise/include" may refer to direct inclusion or indirect inclusion. Optionally, the term "comprise/include" mentioned in the embodiments of the present disclosure may be replaced with "indicate" or "used for determining." For example, A including B may be replaced with A indicating B, or A used for determining B.

In various embodiments of the present disclosure, the magnitude of the serial number of each of the above processes does not mean the sequential order of execution. The order of execution of the processes should be determined by their function and inherent logic without constituting any limitation of the process of implementing the embodiments of the present disclosure.

In several embodiments provided in the present application, it will be understood that, the disclosed systems, apparatuses/devices, and methods may be implemented through other manners. For example, the apparatus embodiments described above are merely exemplary. For example, the division of the units is only a logical functional division. In an actual implementation, there may be other division manners. For example, a plurality of units or components may be combined or integrated into another system, or some features may be ignored or not executed. In addition, the mutual coupling or direct coupling or communicative connection shown or discussed may be an indirect coupling or communicative connection through some interfaces, apparatuses or units, and may be an electrical connection, a mechanical connection, or other forms of connections. The units illustrated as separate components may be or may not be physically separated, and the components shown as units may be or may not be physical units. That is, they may be located in one place, or may be distributed onto a plurality of network units. Some or all of the units may be selected according to actual needs, to achieve the purposes of the solutions in the embodiments. In addition, the functional units in the embodiments of the present application may be integrated into a single processing unit, or the units may be separate physical units, or two or more units may be integrated into a single unit.

All or part of the above embodiments may be implemented in a form of software, hardware, firmware, or any combination thereof. When implemented using software, all or part of the above embodiments may be implemented in a form of a computer program product. The computer program product includes one or more computer instructions. When loaded and executed on a computer, the computer program instructions produce, in all or in part, a process or function in accordance with the embodiments of the present disclosure. The computer may be a general-purpose computer, a dedicated computer, a computer network, or any of other programmable apparatuses. The computer instructions may be stored in a computer-readable storage medium or transmitted from one computer-readable storage medium to another computer-readable storage medium. For example, the computer instructions may be transmitted from a website, a computer, server or data center to another website, computer, server or data center through wired manner (e.g., coaxial cable, optical fiber, or digital subscriber line (DSL)) or wireless (e.g., infrared, radio or microwave) manner. The computer-readable storage medium may be any available medium to which a computer can access or may be a data storage device, such as a server or a data center that includes one or more available media. The available medium may be a magnetic medium (e.g., a floppy disk, a hard disk, or a magnetic tape), an optical medium (e.g., a digital video disk (DVD)), or a semiconductor medium (e.g., a solid state disk (SSD)).

The foregoing descriptions are merely specific implementations of the present disclosure, but the protection scope of the present disclosure is not limited thereto. Any skilled person in the art could readily conceive of variations or replacements within the technical scope of the present disclosure, which shall be all included in the protection scope of the present disclosure. Therefore, the protection scope of the present disclosure shall be subject to the protection scope of claims.

## Claims

1. A wireless communication method, comprising:
receiving, by a first device, first information, wherein the first information is used for indicating whether a first terminal device supports a first-type algorithm, and the first-type algorithm is a 256-bit ciphering algorithm; and
determining, by the first device, a first algorithm based on the first information, wherein the first algorithm is a ciphering algorithm used between the first device and the first terminal device.

2. The method according to claim 1, wherein in a case where the first terminal device supports the first-type algorithm, the first information comprises one or more first identifiers, and the one or more first identifiers are used for indicating one or more first-type algorithms supported by the first terminal device.

3. The method according to claim 1 or 2, wherein the first information comprises first indication information, and the first indication information is used for indicating whether the first terminal device supports the first-type algorithm.

4. The method according to claim 1 or 2, wherein in a case where the first terminal device supports the first-type algorithm, the first information comprises second indication information, and the second indication information is used for indicating that the first device uses the first-type algorithm as the first algorithm.

5. The method according to any one of claims 1 to 4, wherein the first information is carried in first capability information, and the first capability information is used for indicating security capabilities of the first terminal device.

6. The method according to any one of claims 1 to 5, wherein determining, by the first device, the first algorithm based on the first information comprises:
in a case where the first terminal device supports the first-type algorithm and the first device supports the first-type algorithm, preferentially selecting, by the first device, the first-type algorithm as the first algorithm;
in a case where the first terminal device supports the first-type algorithm and the first device does not support the first-type algorithm, selecting, by the first device, a second-type algorithm as the first algorithm, the second-type algorithm being a 128-bit ciphering algorithm;
in a case where the first terminal device does not support the first-type algorithm, selecting, by the first device, the second-type algorithm as the first algorithm.

7. The method according to any one of claims 1 to 6, wherein the method further comprises:
sending, by the first device, second information to a second device, wherein the second information is used for indicating a second algorithm, the second algorithm is a ciphering algorithm used between the second device and the first terminal device, and the second algorithm is determined by the first device based on the first information.

8. The method according to any one of claims 1 to 7, wherein the method further comprises:
sending, by the first device, the first information to a second device, wherein the first information is used by the second device to determine a second algorithm, and the second algorithm is a ciphering algorithm between the second device and the first terminal device.

9. The method according to any one of claims 1 to 8, wherein the first device is an access network device.

10. The method according to any one of claims 1 to 6, wherein the first device is a core network device.

11. A wireless communication method, comprising:
receiving, by a first terminal device, a first message sent by a first device, wherein the first message comprises indication information of a first algorithm, and the first algorithm is a ciphering algorithm used between the first device and the first terminal device; and
using, by the first terminal device, the first algorithm for ciphering with the first device;
wherein the first algorithm is determined based on first information, the first information is used for indicating whether the first terminal device supports a first-type algorithm, and the first-type algorithm is a 256-bit ciphering algorithm.

12. The method according to claim 11, wherein in a case where the first terminal device supports the first-type algorithm, the first information comprises one or more first identifiers, and the one or more first identifiers are used for indicating one or more first-type algorithms supported by the first terminal device.

13. The method according to claim 11 or 12, wherein the first information comprises first indication information, and the first indication information is used for indicating whether the first terminal device supports the first-type algorithm.

14. The method according to claim 11 or 12, wherein in a case where the first terminal device supports the first-type algorithm, the first information comprises second indication information, and the second indication information is used for indicating that the first device uses the first-type algorithm as the first algorithm.

15. The method according to any one of claims 11 to 14, wherein in a case where the first terminal device supports the first-type algorithm and the first device supports the first-type algorithm, the first algorithm is the first-type algorithm.

16. The method according to any one of claims 11 to 15, wherein in a case where the first terminal device supports the first-type algorithm and the first device does not support the first-type algorithm, the first algorithm is a second-type algorithm, and the second-type algorithm is a 128-bit ciphering algorithm.

17. The method according to any one of claims 11 to 16, wherein in a case where the first terminal device does not support the first-type algorithm, the first algorithm is a second-type algorithm.

18. The method according to any one of claims 11 to 17, wherein before receiving, by the first terminal device, the first message sent by the first device, the method further comprises:
sending, by the first terminal device, the first information to the first device.

19. The method according to claim 18, wherein the first information is carried in first capability information, and the first capability information is used for indicating security capabilities of the first terminal device.

20. The method according to any one of claims 11 to 19, wherein the first device is an access network device or a core network device.

21. A communication device, wherein the communication device is a first device, and the communication device comprises:
a receiving module, configured to receive first information, wherein the first information is used for indicating whether a first terminal device supports a first-type algorithm, and the first-type algorithm is a 256-bit ciphering algorithm; and
a determining module, configured to determine a first algorithm based on the first information, wherein the first algorithm is a ciphering algorithm used between the first device and the first terminal device.

22. The communication device according to claim 21, wherein in a case where the first terminal device supports the first-type algorithm, the first information comprises one or more first identifiers, and the one or more first identifiers are used for indicating one or more first-type algorithms supported by the first terminal device.

23. The communication device according to claim 21 or 22, wherein the first information comprises first indication information, and the first indication information is used for indicating whether the first terminal device supports the first-type algorithm.

24. The communication device according to claim 21 or 22, wherein in a case where the first terminal device supports the first-type algorithm, the first information comprises second indication information, and the second indication information is used for indicating that the first device uses the first-type algorithm as the first algorithm.

25. The communication device according to any one of claims 21 to 24, wherein the first information is carried in first capability information, and the first capability information is used for indicating security capabilities of the first terminal device.

26. The communication device according to any one of claims 21 to 25, wherein determining, by the first device, the first algorithm based on the first information comprises:
in a case where the first terminal device supports the first-type algorithm and the first device supports the first-type algorithm, preferentially selecting, by the first device, the first-type algorithm as the first algorithm;
in a case where the first terminal device supports the first-type algorithm and the first device does not support the first-type algorithm, selecting, by the first device, a second-type algorithm as the first algorithm, the second-type algorithm being a 128-bit ciphering algorithm;
in a case where the first terminal device does not support the first-type algorithm, selecting, by the first device, the second-type algorithm as the first algorithm.

27. The communication device according to any one of claims 21 to 26, wherein the communication device further comprises:
a first sending module, configured to send second information to a second device, wherein the second information is used for indicating a second algorithm, the second algorithm is a ciphering algorithm used between the second device and the first terminal device, and the second algorithm is determined by the first device based on the first information.

28. The communication device according to any one of claims 21 to 26, wherein the communication device further comprises:
a second sending module, configured to send the first information to a second device, wherein the first information is used by the second device to determine a second algorithm, and the second algorithm is a ciphering algorithm between the second device and the first terminal device.

29. The communication device according to any one of claims 21 to 28, wherein the first device is an access network device.

30. The communication device according to any one of claims 21 to 26, wherein the first device is a core network device.

31. A communication device, wherein the communication device is a first terminal device, and the communication device comprises:
a receiving module, configured to receive a first message sent by a first device, wherein the first message comprises indication information of a first algorithm, and the first algorithm is a ciphering algorithm used between the first device and the first terminal device; and
a using module, configured to use the first algorithm for ciphering with the first device;
wherein the first algorithm is determined based on first information, the first information is used for indicating whether the first terminal device supports a first-type algorithm, and the first-type algorithm is a 256-bit ciphering algorithm.

32. The communication device according to claim 31, wherein in a case where the first terminal device supports the first-type algorithm, the first information comprises one or more first identifiers, and the one or more first identifiers are used for indicating one or more first-type algorithms supported by the first terminal device.

33. The communication device according to claim 31 or 32, wherein the first information comprises first indication information, and the first indication information is used for indicating whether the first terminal device supports the first-type algorithm.

34. The communication device according to claim 31 or 32, wherein in a case where the first terminal device supports the first-type algorithm, the first information comprises second indication information, and the second indication information is used for indicating that the first device uses the first-type algorithm as the first algorithm.

35. The communication device according to any one of claims 31 to 34, wherein in a case where the first terminal device supports the first-type algorithm and the first device supports the first-type algorithm, the first algorithm is the first-type algorithm.

36. The communication device according to any one of claims 31 to 35, wherein in a case where the first terminal device supports the first-type algorithm and the first device does not support the first-type algorithm, the first algorithm is a second-type algorithm, and the second-type algorithm is a 128-bit ciphering algorithm.

37. The communication device according to any one of claims 31 to 36, wherein in a case where the first terminal device does not support the first-type algorithm, the first algorithm is a second-type algorithm.

38. The communication device according to any one of claims 31 to 37, wherein the communication device further comprises:
a sending module, configured to send the first information to the first device before the first terminal device receives the first message sent by the first device.

39. The communication device according to claim 38, wherein the first information is carried in first capability information, and the first capability information is used for indicating security capabilities of the first terminal device.

40. The communication device according to any one of claims 31 to 39, wherein the first device is an access network device or a core network device.

41. A communication device, comprising a transceiver, a memory, and a processor, wherein the memory is configured to store a program, and the processor is configured to call the program in the memory and control the transceiver to receive or send signals, so as to cause the communication device to perform the method according to any one of claims 1 to 10.

42. A communication device, comprising a transceiver, a memory, and a processor, wherein the memory is configured to store a program, and the processor is configured to call the program in the memory and control the transceiver to receive or send signals, so as to cause the communication device to perform according to any one of claims 11 to 20.

43. An apparatus, comprising a processor configured to call a program from a memory to cause the apparatus to perform the method according to any one of claims 1 to 10 or the method according to any one of claims 11 to 20.

44. A chip, comprising a processor configured to call a program from a memory to cause a device equipped with the chip to perform the method according to any one of claims 1 to 10 or the method according to any one of claims 11 to 20.

45. A computer-readable storage medium, having stored thereon a program, wherein the program causes a computer to perform the method according to any one of claims 1 to 10 or the method according to any one of claims 11 to 20.

46. A computer program product, comprising a program that causes a computer to perform the method according to any one of claims 1 to 10 or the method according to any one of claims 11 to 20.

47. A computer program, wherein the computer program causes a computer to perform the method according to any one of claims 1 to 10 or the method according to any one of claims 11 to 20.
